# EUROPÄISCHE PATENTSCHRIFT

(11) **EP 1 354 152 B1**
(45) Veröffentlichungstag und Bekanntmachung des Hinweises auf die Patenterteilung: **22.12.2004**
(21) Anmeldenummer: 01995619.2
(22) Anmeldetag: 14.12.2001
(51) Int. Cl.: F16H 57/02, H02K 5/22, H02K 7/116

(54) **GETREIBE-ANTRIEBSEINHEIT**
TRANSMISSION DRIVE UNIT
UNITE D'ENTRAINEMENT A ENGRENAGES

(30) Priorität: 12.01.2001 DE 10101521
(43) Veröffentlichungstag der Anmeldung: 22.10.2003
(73) Patentinhaber: ROBERT BOSCH GMBH, 70442 Stuttgart (DE)
(72) Erfinder: HAUSSECKER, Walter, 77830 Buehlertal (DE); KRAUTH, Marco, 76547 Sinzheim (DE)
(86) Internationale Anmeldenummer: PCT/DE2001/004756
(87) Internationale Veröffentlichungsnummer: WO 2002/055902

(56) Entgegenhaltungen:
- EP-A- 0 522 324
- DE-A- 4 143 136
- DE-A- 19 727 118
- US-A- 5 771 516

## Beschreibung

### Stand der Technik

Die Erfindung betrifft eine Getriebe-Antriebseinheit nach der Gattung des unabhängigen Anspruchs.

Mit der gattungsgemäßen DE 197 27 118 A1 ist eine elektrische Antriebseinheit bekannt geworden, bei der ein im wesentlichen topfförmiges Getriebegehäuse zur Aufnahme von Getriebeelementen an einem Polgehäuse befestigt ist und durch einen Getriebedeckel verschließbar ist. Dabei wird beispielsweise der Getriebedeckel durch Schnapphaken am Getriebegehäuse befestigt. Nachteilig ist dabei der benötigte Bauraum für die Verrastvorrichtung und die damit verbundene Vergrößerung der Bauhöhe der Antriebseinheit. Außerdem treten bei dieser Verschließetechnik auch Dichtigkeitsprobleme gegenüber eindringendem Wasser auf.

Es sind ebenfalls andere Montagemöglichkeiten für Getriebedeckel bekannt, wie z.B. Verschrauben, Kleben, Einpressen oder Ultraschall-Verschweißen. Dabei ist das Ultraschall-Schweißen das sicherste und kostengünstigste Verfahren. Diese Montagetechnik erfordert zwar wenig Bauraum, jedoch versagt das Verfahren beim Verschweißen eines mit einem kostengünstigen thermoplastischen Kunststoff beschichteten Getriebedeckels, da dieses Dichtmaterial gegenüber Ultraschall-Schweißen nicht beständig ist.

### Vorteile der Erfindung

Die erfindungsgemäße Vorrichtung mit den Merkmalen des Anspruchs 1 hat demgegenüber den Vorteil, dass auch bei der Verwendung von thermoplastischen Dichtwerkstoffen eine sicher abdichtende und bauraumsparende Verschließung des Gehäuses der Getriebe-Antriebseinheit gewährleistet ist. Dies wird ermöglicht, indem am Deckel angeordnete Führungsnasen zum Verschließen des Gehäuses unter Stege geschoben werden, die an dem Gehäuse angeformt sind. Dabei wird der verwendete Dichtwerkstoff weder Ultraschall noch Hitze, sondern lediglich mechanischer Beanspruchung ausgesetzt. Durch den Verzicht auf das Ultraschall-Schweißen werden aufwendige Montagemaschinen sowie deren Wartung und Energiebedarf gespart. Die erfindungsgemäße Getriebe-Antriebseinheit erlaubt die Verwendung von kostengünstigen thermoplastischen Dichtwerkstoffen, die nicht vulkanisiert werden müssen, sondern auf den Gehäusedeckel aufgespritzt werden. Das Verschließen des Gehäuses durch die rein mechanische Verschiebung des Deckels stellt eine besonders einfache Montagetechnik dar und ist somit kostengünstiger als Schrauben, Kleben oder Einpressen.

Durch die in den Unteransprüchen angegebenen Maßnahmen sind vorteilhafte Weiterbildungen der Vorrichtung nach dem Hauptanspruch möglich. Wird am Umfang der Gehäuseöffnung eine Dichtfläche angeformt, so entsteht durch die Anpressung des Deckels über die Stege und die Führungsnasen eine wohldefinierte sichere Dichtung. Besonders vorteilhaft ist dabei die Minimierung der Toleranz des Höhenaufbaus der Getriebe-Antriebseinheit, da die Stege und Führungsnasen relativ genau gefertigt werden können und das Verschieben des Deckels beim Schließen die Gesamthöhe des Gehäuses nicht verändert. Dies ist von Bedeutung beim Einbau der Getriebe-Antriebseinheit unter beengtem Bauraumverhältnissen wie bei Kraftfahrzeugtüren oder Schiebedächern.

Ist die Dichtfläche des Gehäuses oder die Innenfläche des Deckels mit einem gummiartigen Werkstoff beschichtet, wird durch die Anpressung des Deckels gegen diese gummiartige Schicht eine besonders gleichmäßige und sichere Dichtwirkung erzielt. Für die Haftwirkung des gummiartigen Werkstoffs ist es günstig, wenn die gesamte Innenfläche des Deckels beschichtet ist. Außerdem kann dann die gummiartige Beschichtung ebenfalls eine Öffnung in der Mitte des Deckels gegenüber dem Mitnehmer der Getriebe-Antriebseinheit abdichten. Die erfindungsgemäße Vorrichtung erlaubt für die Beschichtung sowohl ein Vulkanisierverfahren als auch ein Umspritzen mit gummiähnlichen Werkstoffen.

Besonders vorteilhaft ist das Umspritzen mit einem gummiartigen Werkstoffes wie z.B. einen thermoplastischen Kunststoff der Innenseite des Deckels, weil dieser Prozeß verfahrenstechnisch einfach und kostengünstig zu handhaben ist. Beim Verschließen des Gehäuses wird eine solche Schicht nicht beschädigt, da bei dem rein mechanischen Verschieben keine Hitze- oder Ultraschallbeanspruchung auftritt.

Die Führungsnasen zentrieren den Deckel stets auf die Dichtfläche des Gehäuses. Dies garantiert eine optimale Dichtwirkung und ermöglicht eine sehr einfache Montage.

Um beim Verschieben des Deckels gegenüber dem Gehäuse eine Anpressung des Deckels gegen die Dichtfläche zu erzielen, sind entweder die Führungsnasen oder die Stege oder auch beide so ausgeformt, dass deren Dicke über ihren Verschließweg zunimmt. Diese Zunahme der Materialstärke bewirkt, dass die Anpreßkraft mit dem Verschieben zunimmt. Dabei ist ein Anschrägen der Führungsnasen und/oder Stege mittels des Spritzgußverfahrens der Bauteile besonders einfach möglich.

Von Vorteil ist es, wenn der Deckel nach dem Verschließen gegenüber dem Gehäuse fixiert wird, um ein Lösen des Deckels, z.B. bei Schüttelbeanspruchung und Vibrationen, wirksam zu verhindern. Besonders einfach und bauraumsparend läßt sich der Deckel beispielsweise mittels Rastnasen oder ähnlichem an den Stegen oder Führungsnasen fixieren, die in entsprechende Öffnungen einrasten. Das Anformen der Rastnasen und der Öffnungen erfordert bei der Herstellung des Gehäuses mittels Spritzgußtechnik keine zusätzlichen Verfahrensschritte.

Der Deckel läßt sich z.B. für Wartungs- oder Reparaturarbeiten lösen, ohne dass dieser oder das Gehäuse dabei zerstört werden. Dies erlaubt eine Wiederverwendung des Gehäuses und bei Verwendung eines geeigneten Dichtwerkstoffes ebenso des Deckels.

Besonders für den Einsatz als Fensterheberantrieb in der Kraftfahrzeugtür, aber auch für andere Anwendungen ist es besonders wichtig, dass ein Eindringen von Wasser in das Gehäuse zuverlässig verhindert wird, was durch die gleichmäßig hohen Anpreßkräfte des Deckels auf die Dichtfläche gewährleistet ist.

Eine besonders bauraumsparende Schließtechnik zwischen Deckel und Gehäuse wird erzielt, indem die Führungsnasen des Deckels vor dem Verschieben beim Schließen in die Aussparungen zwischen den Stegen des Gehäuses eingesetzt werden. Dadurch ist der Deckel senkrecht zur Deckelebene einsetz- und rausnehmbar.

Von besonderem Vorteil ist es, wenn der Deckel und die Gehäuseöffnung mit den Ausformungen von Führungsnasen und Stegen kreisförmig ausgeformt sind. Dabei lassen sich die Führungsnasen des Deckels in sehr einfacher Weise bajonettartig durch eine Drehung unter die Stege des Gehäuses schieben. Ein solcher Bajonettverschluß benötigt für das Öffnen und Schließen ausschließlich exakt die Fläche der Gehäuseöffnung. Außerdem ist eine Drehung des Deckels zu dessen Montage in der Fertigung sehr einfach zu handhaben.

Besonders vorteilhaft ist hierbei die Ausformung von sechs bis sechzehn Führungsnasen am Deckel und sechs bis sechzehn Stegen mit dazwischen liegenden Aussparungen am Gehäuse, weil dadurch ein besonders gleichmäßiger Kraftschluß auf die rundum laufende Dichtfläche des Gehäuses erzielt wird. Für eine Montage des Deckels mittels Roboter ist es besonders günstig, wenn der Deckel möglichst viele Führungsnasen aufweist, weil dadurch der maximale Verdrehwinkel des Roboters minimiert wird und viele Montagepositionen ermöglicht werden. Andererseits muß eine ausreichende Breite der Stege und Fürungsnasen erhalten werden, um die mechanische Stabilität der Verbindung zu gewährleisten. Für einen Deckel mit dem Umfang unseres Ausführungsbeispiels eines Fensterheber-/Schiebedachantriebs werden diese Vorteile mit zwölf Stegen/Führungsnasen besonders gut erzielt.

Weist die Getriebe-Antriebseinheit eine Achse auf, auf der ein Schneckenrad und ein Mitnehmer gelagert ist, so kann der Mitnehmer in vorteilhafter Weise durch eine Ausformung im Deckel axial und/oder radial gelagert werden. Dadurch wird in einfacher Weise eine zuverlässige Kraft-Wirk-Verbindung zwischen dem Mitnehmer und dem Schneckenrad gewährleistet.

Außerdem kann auch die Achse, die senkrecht zum Deckel angeordnet ist, vorteilhafterweise durch eine Ausformung in demselben axial und/oder radial gelagert werden.

In einer bevorzugten Ausgestaltung weist der Deckel eine kreisförmige Öffnung auf, durch die die Achse mit dem darauf gelagerten Mitnehmer herausragt. Dabei dichtet günstigerweise der am Deckel angeformte gummiartige Werkstoff die kreisförmige Öffnung gegenüber dem Mitnehmer ab. Somit dichtet eine durchgängige Schicht des gummiartigen Werkstoffs das Gehäuse sowohl an der umlaufenden Dichtfläche des Gehäuses als auch zum drehbaren Mitnehmer hin ab.

Liegt das Verhältnis der Länge der Führungsnase zum Durchmesser des Deckels im Bereich zwischen 1 : 50 und 5 : 50 und ebenfalls das Verhältnis der Länge der Stege zum lichten Durchmesser der Gehäuseöffnung, so erzielt man damit eine maximale lichte Öffnung für die Montage des Schneckenrads bei einer minimalen Vergrößerung des Außendurchmessers des Gehäuses. Das Verhältnis von 3 : 50 stellt einen guten Kompromiß zwischen maximaler Öffnung des Gehäuses und ausreichender mechanischer Stabilität des Verschlusses durch die Überlappung von den Stegen mit den Führungsnasen dar.

Von besonderer Bedeutung sind die Vorteile des geringen Bauraums, insbesondere der geringen Gehäusehöhe, und der zuverlässigen Abdichtung gegen eindringendes Wasser unter der Verwendung von kostengünstigeren Dichtwerkstoffen beim Einsatz der Getriebe-Antriebseinheit als Fensterheber- oder Schiebedachantrieb.

### Zeichnung

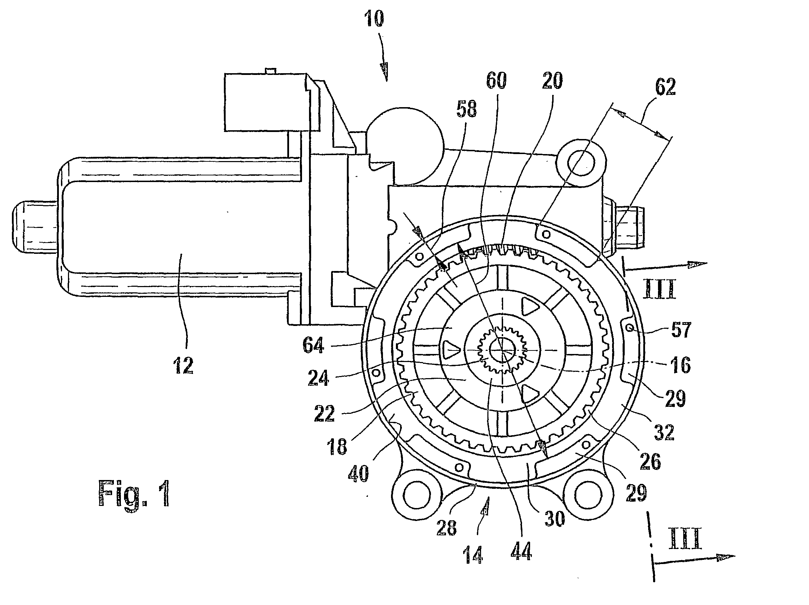

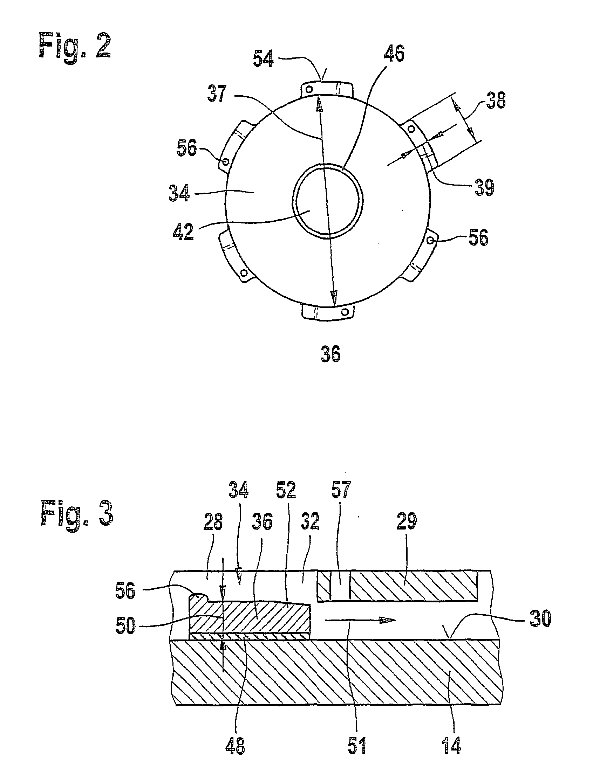

In der Zeichnung ist ein Ausführungsbeispiel einer erfindungsgemäßen Vorrichtung dargestellt und in der nachfolgenden Beschreibung näher erläutert. Es zeigen Figur 1 eine erfindungsgemäße Vorrichtung ohne Deckel in der Draufsicht, Figur 2 einen Deckel für das Ausführungsbeispiel in Figur 1 und Figur 3 einen Schnitt nach der Linie III-III in Figur 1 mit eingesetztem Deckel.

### Beschreibung

Das in Figur 1 dargestellte Ausführungsbeispiel zeigt eine erfindungsgemäße Getriebe-Antriebseinheit 10 mit einem Motor 12 und einem Getriebegehäuse 14, in das drehfest eine Achse 16 eingespritzt ist. Auf der Achse 16 ist ein Schneckenrad 18 gelagert, das von einer mit dem Motor 12 wirkverbundenen Schnecke 20 angetrieben wird. In das Schneckenrad 18 greift ein ebenfalls auf der Achse 16 gelagerter Mitnehmer 22, an dem ein Abtriebsritzel 24 mit Außenverzahnung angeformt ist. Das Getriebegehäuse 14 weist eine kreisförmige Öffnung 26 auf, durch die das Schneckenrad 18 auf die Achse 16 eingesetzt wird. Am äußeren Umfang der Gehäuseöffnung 26 ragen von einer zylinderförmig ausgebildeten Wand 28 des Gehäuses 14 kurze Stege 29 radial über eine innerhalb des Gehäuses 14 angeformte Dichtfläche 30. Zwischen den Stegen 29 sind Aussparungen 32 ausgeformt, in die der in Figur 2 dargestellte Deckel 34 des Getriebegehäuses 14 eingesetzt wird.

Der Deckel 34 ist kreisförmig ausgebildet und weist an seinem äußeren Umfang sechs Führungsnasen 36 auf. Die Breite 38 der Führungsnasen 36 ist so bemessen, dass diese in die Aussparungen 32 passen. Die Führungsnasen 36 sind gerade von solcher Länge 39, dass diese den Deckel 34 an der Innenseite 40 der Gehäusewand 28 zentrieren. In der Mitte des Deckels 34 ist ein kreisförmiges Loch 42 ausgeformt, durch das beim Einsetzen des Deckels 34 die Achse 16 und ein Teil 44 des Mitnehmers 22 zum freien Ende der Achse 16 hin mit dem Abtriebsritzel 24 durch das Loch 42 im Deckel 34 herausragen. Die Innenseite des Deckels 34 ist mit einem thermoplastischen Kunststoff 48 als gummiartiger Werkstoff 48 umspritzt, der auch die Innenseiten der Führungsnasen 36 bedeckt und zu dem Loch 42 im Deckel 34 hin als Dichtlippe 46 ausgeformt ist, welche das Gehäuse 14 gegenüber dem Mitnehmer 22 abdichtet.

Figur 3 zeigt einen Schnitt durch das Getriebegehäuse 14 mit eingesetztem Deckel 34. Nach dem Einfügen des Deckels 34 entlang der Achse 16 liegt der gummiartige Werkstoff 48 auf der Dichtfläche 30 des Gehäuses 14 auf. Beim Verdrehen des Deckels 34 in Pfeilrichtung 51 werden die Führungsnasen 36 unter die Stege 29 geschoben. Die Materialstärke 50 der Führungsnase 36 entspricht deren Dicke 50 und ist auf der Seite 52 zur Drehrichtung 51 beim Schließen hin geringer als auf der anderen Seite der Führungsnase 36. Dadurch fügt sich die Führungsnase 36 beim Beginn des Verdrehens in Schließrichtung 51 sicher unter den Steg 29. Im Verlauf des weiteren Verdrehens in Schließrichtung 51 nimmt die Materialstärke 50 der Führungsnase 36 zu und bewirkt dadurch eine zunehmende Anpreßkraft des Deckels 34 gegen die Dichtfläche 30. Der Deckel 34 wird beim Drehen durch die Führungsnasen 36 geführt und zentriert, deren Außenseite 54 auf der Innenseite 40 der Gehäusewand 28 gleitet. Zur Fixierung des Deckels 34 gegenüber dem Gehäuse 14 weisen die Führungsnasen 36 eine Rastnase 56 auf, die nach dem vollständigen Schließen in eine entsprechende Öffnung 57 in den Stegen 29 einrastet. Prinzipiell können die Rastnasen 56 auch an den Stegen 29 und die Löcher 57 an den Führungsnasen 36 ausgeformt sein. Ebenso kann die konkrete Ausgestaltung der Rastnasen 56 und der Löcher 57 variieren. Im Ausführungsbeispiel beträgt das Verhältnis der Länge 39 der Führungsnasen 36 zum Durchmesser 37 des Deckels 34 in etwa 3 : 50. Durch diese relativ geringe Überlappung von Führungsnasen 36 mit den Stegen 29 kann die Dichtfläche 30 relativ schmal ausgebildet sein, was eine große Öffnung 26 für die Montage des Schneckenrads 18 ermöglicht, ohne die Baugröße des Gehäuses 14 wesentlich zu vergrößern. Für eine hinreichend große Öffnung 26 ist auch ein Verhältnis im Bereich von 1 : 50 bis 5 : 50 der Führungsnase 36 zum Durchmesser 37 und der Steglänge 58 zum Durchmesser 60 der Gehäuseöffnung 26 möglich, um einen hinreichenden Kompromiß zwischen geringer Baugröße des Gehäuses 14 und hinreichender mechanischer Stabilität des Bajonettverschlusses zu gewährleisten. Im geschlossenen Zustand des Gehäuses 14 überlappen sich die Führungsnasen 36 mit den Stegen 29 über deren gesamte Länge 39, 58. Bei dieser Ausführung kann der Deckel 34 durch Drehen in entgegengesetzter Richtung wieder geöffnet werden, ohne dass der Deckel 34 oder das Gehäuse 14 beschädigt wird. Somit kann sowohl das Gehäuse 14 als auch der Deckel 34 nach einem Öffnen wieder verwendet werden und das Gehäuse 14 über mehrere Öffnungs- und Schließvorgänge hinweg sicher gegen Wasser abdichten.

In geschlossenem Zustand drückt der Deckel 34 gegen den äußeren Bereich 64 des Mitnehmers 22 und preßt diesen axial in Richtung Gehäuseinnenraum. Dies stellt eine sehr einfache, aber sehr wirkungsvolle axiale Lagerung des Mitnehmers 22 dar, der dadurch in Wirkverbindung mit dem Schneckenrad 18 gehalten wird. In einer Variation des Ausführungsbeispiels wird zusätzlich das freie Ende der Achse 16 mit dem Teil 44 des Mitnehmers 22 und der Dichtlippe 46 im Loch 42 des Deckels 34 radial abgestützt.

In einem weiteren Ausführungsbeispiel hat der Deckel 34 in der Mitte kein Loch 42, sondern weist auf seiner Innenseite eine Ausformung zur radialen und axialen Lagerung des freien Endes der Achse 16 auf. Damit bildet der Deckel 34 bei geschlossenem Gehäuse ein zweites Lager für die Achse 16. Hierbei ist der gummiartige Werkstoff 48 direkt an der Dichtfläche 30 angeformt und der Deckel 34 weist keine Beschichtung mit einem gummiartigen Werkstoff 48 auf.

In weiteren Variationen der Ausführungsbeispiele variiert nicht die Materialstärke 50 der Führungsnasen 36, sondern die der Stege 29 über deren Breite 62. Prinzipiell ist eine symmetrische Anordnung der Führungsnasen aufgrund der gleichmäßigen Kraftverteilung und Montagevorteile erstrebenswert. Ist dies aber aus baulichen Gründen nicht möglich (z.B. weil an einer Stelle Halteelemente angebracht werden) , kann ein Steg an zumindest einer Stelle auch asymmetrisch angeordnet sein. Als gummiartiger Werkstoff 48 kann ebenso ein beliebiges Dichtungsmaterial verwendet werden, das den Dichtigkeitsanforderungen der Getriebe-Antriebseinheit 10 genügt. Dabei spielt es keine Rolle, ob der Dichtwerkstoff 48 aufgespritzt oder vulkanisiert wird oder ob die gesamte Fläche des Deckels beschichtet ist oder nur Teile davon. So ist es beispielsweise möglich, nur den Deckel 34 ohne die Führungsnasen 36 mit einem gummiähnlichen Werkstoff 48 zu beschichten. Auch ist die Fixierung des Deckels 34 gegenüber dem Gehäuse 14 keinesfalls auf Rastnasen 56 und Öffnungen 57 beschränkt, sondern es sind auch andere Mittel zur Fixierung, wie Stempel, Paßstifte oder ähnliches vorstellbar. Die erfindungsgemäße Getriebe-Antriebseinheit 10 ist besonders geeignet als Antrieb für Fensterheber und Schiebedächer, kann aber auch für andere Verstellantriebe im und außerhalb des Kraftfahrzeugs und weiteren Antrieben verwendet werden.

## Patentansprüche

1. Getriebe-Antriebseinheit (10), die ein Gehäuse (14) mit angeformten Stegen (29) und mit einer Öffnung (26) und einem Deckel (34) zum Verschließen des Gehäuses (14) aufweist, wobei an dem Deckel (34) mindestens zwei Führungsnasen (36) angeordnet sind, **dadurch gekennzeichnet, dass** die Führungsnasen unter die angeformten Stege (29) geschoben werden.

2. Getriebe-Antriebseinheit (10) nach Anspruch 1, **dadurch gekennzeichnet, dass** am Gehäuse (14) eine Dichtfläche (30) angeformt ist, gegen die der Deckel (34) über die Stege (29) und die Führungsnasen (36) angepreßt wird.

3. Getriebe-Antriebseinheit (10) nach einem der Ansprüche 1 oder 2, **dadurch gekennzeichnet, dass** die Dichtfäche (30) am Gehäuse (14) und/oder der Deckel (34) an seiner Innenseite zumindest im äußeren Umfangsbereich mit einem gummiartigen Werkstoff (48) beschichtet ist.

4. Getriebe-Antriebseinheit (10) nach einem der Ansprüche 1 bis 3, **dadurch gekennzeichnet, dass** der Deckel (34) an seiner Innenseite zumindest im äußeren Umfangsbereich mit einem gummiartiger Werkstoff (48), insbesondere ein thermoplastischer Kunststoff (48), umspritzt ist.

5. Getriebe-Antriebseinheit (10) nach einem der Ansprüche 1 bis 4, **dadurch gekennzeichnet, dass** die Führungsnasen (36) den Deckel (34) zur Dichtfläche (30) des Gehäuses (14) zentrieren.

6. Getriebe-Antriebseinheit (10) nach einem der Ansprüche 1 bis 5, **dadurch gekennzeichnet, dass** die Materialstärke (50) der Führungsnasen (36) und/oder der Stege (29) über deren Breite (38,62) variiert.

7. Getriebe-Antriebseinheit (10) nach einem der Ansprüche 1 bis 6, **dadurch gekennzeichnet, dass** der Deckel (34) nach dem Verschließen gegenüber dem Gehäuse (14) insbesondere mittels Rastnasen (56) oder Ähnlichem, fixiert ist.

8. Getriebe-Antriebseinheit (10) nach einem der Ansprüche 1 bis 7, **dadurch gekennzeichnet, dass** der Deckel (34) nach dem Verschließen wieder zerstörungsfrei lösbar ist und zumindest das Gehäuse (14) wiederverwendbar ist.

9. Getriebe-Antriebseinheit (10) nach einem der Ansprüche 1 bis 8, **dadurch gekennzeichnet, dass** der Deckel (34) das Gehäuse (14) wasserdicht schließt.

10. Getriebe-Antriebseinheit (10) nach einem der Ansprüche 1 bis 9, **dadurch gekennzeichnet, dass** das Gehäuse (14) zwischen den Stegen (29) Aussparungen (32) aufweist, in die der Deckel (34) mit den Führungsnasen (36) vor dem Verschieben einsetzbar ist.

11. Getriebe-Antriebseinheit (10) nach einem der Ansprüche 1 bis 10, **dadurch gekennzeichnet, dass** der Deckel (34) und die Öffnung (26) in etwa kreisförmig sind und die Führungsnasen (36) zum Verschließen des Gehäuses (14) durch eine Drehung unter die Stege (29) schiebbar sind.

12. Getriebe-Antriebseinheit (10) nach Anspruch 11, **dadurch gekennzeichnet, dass** das Gehäuse (14) 6 bis 16, insbesondere 12 Stege (29), und der Deckel (34) 6 bis 16, insbesondere 12 Führungsnasen (36) aufweist.

13. Getriebe-Antriebseinheit (10) nach einem der Ansprüche 1 bis 12, **dadurch gekennzeichnet, dass** senkrecht zum Deckel (34) eine Achse (16) angeordnet ist, auf der ein Schneckenrad (18) und ein Mitnehmer (22) angeordnet ist, der mittels dem Deckel (34) axial und/oder radial gelagert ist.

14. Getriebe-Antriebseinheit (10) nach einem der Ansprüche 1 bis 13, **dadurch gekennzeichnet, dass** die Achse (16) mittels des Deckels (34) axial und/oder radial gelagert ist.

15. Getriebe-Antriebseinheit (10) nach einem der Ansprüche 1 bis 14, **dadurch gekennzeichnet, dass** der Deckel (34) ein kreisförmiges Loch (42) aufweist, das mittels dem gummiartigen Werkstoff (48) gegen den Mitnehmer (22) abgedichtet ist.

16. Getriebe-Antriebseinheit (10) nach einem der Ansprüche 11 bis 15, **dadurch gekennzeichnet, dass** das Verhältnis der Länge (39) der Führungsnase (36) zum Durchmesser (37) des Deckels (34) und das Verhältnis der Länge (58) der Stege (29) zum Durchmesser (60) der Gehäuseöffnung (26) zwischen 1:50 und 5:50, insbesondere in etwa 3:50 beträgt.

17. Getriebe-Antriebseinheit (10) nach einem der Ansprüche 1 bis 16, **dadurch gekennzeichnet, dass** die Getriebe-Antriebseinheit (10) ein Fensterheber- oder Schiebedachantrieb (10) ist.

## Claims

1. Transmission/drive unit (10) which has a housing (14) with integrally formed webs (29) and with an orifice (26) and a cover (34) for closing the housing (14), at least two guide noses (36) being arranged on the cover (34), **characterized in that** the guide noses (36) are pushed under the integrally formed webs (29).

2. Transmission/drive unit (10) according to Claim 1, **characterized in that** the housing (14) has integrally formed on it a sealing surface (30), against which the cover (34) is pressed via the webs (29) and guide noses (36).

3. Transmission/drive unit (10) according to either one of Claims 1 and 2, **characterized in that** the sealing surface (30) on the housing (14) and/or the cover (34), on its inside, is coated, at least in the outer circumferential region, with a rubber-like material (48).

4. Transmission/drive unit (10) according to one of Claims 1 to 3, **characterized in that** the cover (34), on its inside, is injection-moulded around, at least in the outer circumferential region, with a rubber-like material (48), in particular a thermoplastic (48).

5. Transmission/drive unit (10) according to one of Claims 1 to 4, **characterized in that** the guide noses (36) centre the cover (34) in relation to the sealing surface (30) of the housing (14).

6. Transmission/drive unit (10) according to one of Claims 1 to 5, **characterized in that** the material thickness (50) of the guide noses (36) and/or of the webs (29) varies over their width (38, 62).

7. Transmission/drive unit (10) according to one of Claims 1 to 6, **characterized in that**, after closing, the cover (34) is fixed with respect to the housing (14), in particular by means of latching noses (56) or the like.

8. Transmission/drive unit (10) according to one of Claims 1 to 7, **characterized in that**, after closing, the cover (34) can be released again non-destructively, and at least the housing (14) can be reused.

9. Transmission/drive unit (10) according to one of Claims 1 to 8, **characterized in that** the cover (34) closes the housing (14) in a water-tight manner.

10. Transmission/drive unit (10) according to one of Claims 1 to 9, **characterized in that** the housing (14) has, between the webs (29), clearances (32), into which the cover (34) can be inserted with the guide noses (36) before displacement.

11. Transmission/drive unit (10) according to one of Claims 1 to 10, **characterized in that** the cover (34) and the orifice (26) are approximately circular, and, to close the housing (14), the guide noses (36) can be pushed under the webs (29) as a result of rotation.

12. Transmission/drive unit (10) according to Claim 11, **characterized in that** the housing (14) has 6 to 16, in particular 12 webs (29), and the cover (34) has 6 to 16, in particular 12 guide noses (36).

13. Transmission/drive unit (10) according to one of Claims 1 to 12, **characterized in that** the cover (34) has arranged perpendicularly to it a shaft (16) on which are arranged a worm wheel (18) and a driver (22) which is mounted axially and/or radially by means of the cover (34).

14. Transmission/drive unit (10) according to one of Claims 1 to 13, **characterized in that** the shaft (16) is mounted axially and/or radially by means of the cover (34).

15. Transmission/drive unit (10) according to one of Claims 1 to 14, **characterized in that** the cover (34) has a circular hole (42) which is sealed off in relation to the driver (22) by means of the rubber-like material (48).

16. Transmission/drive unit (10) according to one of Claims 11 to 15, **characterized in that** the ratio of the length (39) of the guide nose (36) to the diameter (37) of the cover (34) and the ratio of the length (58) of the webs (29) to the diameter (60) of the housing orifice (26) are between 1:50 and 5:50, in particular approximately 3:50.

17. Transmission/drive unit (10) according to one of Claims 1 to 16, **characterized in that** the transmission/drive unit (10) is a window-lifter or sliding-roof drive (10).

## Revendications

1. Unité d'entraînement à engrenages (10), qui présente un boîtier (14) comportant des nervures façonnées (29) ainsi qu'une ouverture (26) et un couvercle (34) pour la fermeture du boîtier (14), avec au moins deux nez de guidage (36) disposés sur le couvercle (34),
**caractérisée en ce que**
les nez de guidage sont poussés sous les nervures façonnées (29).

2. Unité d'entraînement à engrenages (10) selon la revendication 1,
**caractérisée en ce qu'**
une surface d'étanchéité (30), contre laquelle le couvercle (34) est pressé au moyen des nervures (29) et des nez de guidage (36), est formée sur le boîtier (14).

3. Unité d'entraînement à engrenages (10) selon l'une des revendications 1 ou 2,
**caractérisée en ce que**
la surface d'étanchéité (30) sur le boîtier (14) et/ou le couvercle (34) est revêtue, sur sa face intérieure, au moins dans la zone périphérique extérieure, d'un matériau du type caoutchouc (48).

4. Unité d'entraînement à engrenages (10) selon l'une des revendications 1 à 3,
**caractérisée en ce que**
le couvercle (34) est revêtu par moulage par injection, sur sa face intérieure au moins dans la zone périphérique extérieure, d'un matériau du type caoutchouc (48), en particulier une matière plastique thermoplastique (48).

5. Unité d'entraînement à engrenages (10) selon l'une des revendications 1 à 4,
**caractérisée en ce que**
les nez de guidage (36) centrent le couvercle (34) contre la surface d'étanchéité (30) du boîtier (14).

6. Unité d'entraînement à engrenages (10) selon l'une des revendications 1 à 5,
**caractérisée en ce que**
l'épaisseur du matériau (50) des nez de guidage (36) et/ou des nervures (19) varie sur leur largeur (38, 62).

7. Unité d'entraînement à engrenages (10) selon l'une des revendications 1 à 6,
**caractérisée en ce que**
le couvercle (34) est fixé après la fermeture, face au boîtier (14), en particulier au moyen de nez d'enclenchement (56) ou similaires.

8. Unité d'entraînement à engrenages (10) selon l'une des revendications 1 à 7,
**caractérisée en ce que**
le couvercle (34) est, après la fermeture, à nouveau amovible sans destruction et au moins le boîtier (14) est réutilisable.

9. Unité d'entraînement à engrenages (10) selon l'une des revendications 1 à 8,
**caractérisée en ce que**
le couvercle (34) ferme le boîtier (14) de façon étanche à l'eau.

10. Unité d'entraînement à engrenages (10) selon l'une des revendications 1 à 9,
**caractérisée en ce que**
le boîtier (14) présente entre les nervures (29) des évidements (32) dans lesquels le couvercle (34) s'introduit au moyen des nez de guidage (36) avant la poussée.

11. Unité d'entraînement à engrenages (10) selon l'une des revendications 1 à 10,
**caractérisée en ce que**
le couvercle (34) et l'ouverture (26) sont approximativement en forme de cercle et les nez de guidage (36) sont, pour la fermeture du boîtier (14), poussés par une rotation sous les nervures (29).

12. Unité d'entraînement à engrenages (10) selon la revendication 11,
**caractérisée en ce que**
le boîtier (14) présente 6 à 16, en particulier 12, nervures (29) et le couvercle (34) 6 à 16, en particulier 12 nez de guidage (36).

13. Unité d'entraînement à engrenages (10) selon l'une des revendications 1 à 12,
**caractérisée en ce que**
perpendiculairement au couvercle (34), un axe (16), comporte une roue hélicoïdale (18) et un entraîneur (22), logé axialement et/ou radialement au centre du couvercle (34).

14. Unité d'entraînement à engrenages (10) selon l'une des revendications 1 à 13,
**caractérisée en ce que**
l'axe (16) est logé axialement et/ou radialement au centre du couvercle (34).

15. Unité d'entraînement à engrenages (10) selon l'une des revendications 1 à 14,
**caractérisée en ce que**
le couvercle (34) présente un trou en forme de cercle, qui est rendu étanche, au moyen du matériau du type caoutchouc (48), par rapport à l'entraîneur (22).

16. Unité d'entraînement à engrenages (10) selon l'une des revendications 11 à 15,
**caractérisée en ce que**
le rapport de la longueur (39) du nez de guidage (36) au diamètre (37) du couvercle (34) et le rapport de la longueur (58) des nervures (29) au diamètre (60) de l'ouverture (26) du boîtier se situe entre 1:50 et 5:50, en particulier environ 3:50.

17. Unité d'entraînement à engrenages (10) selon l'une des revendications 1 à 16,
**caractérisée en ce que**
l'unité d'entraînement à engrenages (10) est un entraînement de lève-glace ou de toit ouvrant (10).
